# EUROPEAN PATENT APPLICATION

(11) **EP 2 548 853 A2**
(43) Date of publication of application: **23.01.2013**
(21) Application number: 11756531.7
(22) Date of filing: 15.03.2011
(51) Int. Cl.: C03C 27/12, E06B 3/66

(54) **INTEGRATED LOWER-PLATE GLASS AND MANUFACTURING METHOD OF VACUUM MULTI-LAYER GLASS INCLUDING SAME**

(30) Priority: 17.03.2010 KR 20100023960
(71) Applicant: Se Jong Materials Ltd., Incheon 405-822 (KR); Ha, Ho, Incheon 406-841 (KR)
(72) Inventor: HA, Ho, Incheon 406-841 (KR)
(74) Representative: Pulieri, Gianluca Antonio
(86) International application number: PCT/KR2011/001778
(87) International publication number: WO 2011/115400

(57) **Abstract**

Disclosed are an integrated lower-plate glass and a manufacturing method of a vacuum multi-layer glass including the same. The invention provides the vacuum multi-layer glass in which: a border unit is formed at the edge of a lower glass plate, so that a space unit is formed inside; a getter insertion unit is formed in one or more inner parts of an upper plate glass settlement unit formed along the inner surface of the border unit; an integrated lower-plate glass of which a vent pipe is connected to one end of the getter insertion unit is prepared; a metal container filled with a getter is settled in the getter insertion unit; an upper glass plate is settled on an upper side of the upper glass plate settlement unit, and the upper glass plate is bonded with the upper side of the upper glass plate settlement unit and with an inner side of the border unit; the other end of the vent pipe is connected to a vacuum pump, so that the space unit is in a vacuum state; and the vent pipe is cut, thereby effectively activating the getter through a simpler process, improving productivity, and reducing a defective proportion.

## Description

### Technical Field

The present invention relates to an integrated lower-plate glass and a manufacturing method of a vacuum multi-layer glass including the same, and in particular to an integrated lower-plate glass and a manufacturing method of a vacuum-layer glass including the same which make it possible to bond an upper layer glass plate to an integrated lower plate glass on which a metallic container filled with a getter is mounted, and a space part of its interior is made to have a vacuum, thus manufacturing a vacuum multi-layer glass in a simple way.

### Background Art

A glass consisting of a single layer is generally used in a conventional glass window thanks to a lower price and an easier manufacture process. In recent years, a glass window consisting of two sheets or three sheets is widely used for the purpose of keeping heat and cold.

A multi-layer glass is generally manufactured in such a way that two or three sheets of glass are spaced apart and are bonded, so the heat and cold keeping effects better than an individual sheet of glass can be obtained between the multi-layer glasses; however owing to a gas residing between the multi-layers, a heat transfer occurs, which results in wasting energy.

Since a temperature difference between an inner surface and an outer surface of a multi-layer glass is large in the winter, a dew formation phenomenon occurs, so a range of vision becomes much worse.

In addition, since a gas (air) residing in the interior of a multi-layer glass works as a medium transferring noises, a sound proof effect is bad.

As a trial to improve the above mentioned problems, there is provided a vacuum multi-layer glass characterized in that moisture or gas (air) residing in a space part between the multi-layer glasses is removed using a vacuum pump, so the interior of it is made to be a vacuum state, and a getter is instead inserted into it, for thereby continuously removing the gas; however the above described method has a complicated process, and productivity is low, and defect ratios are high.

So, it is needed to develop a new technology which makes it possible to enhance the performance of a getter while ensuring a simplified process.

### Disclosure of Invention

Accordingly, it is an object of the present invention to provide an integrated lower-plate glass and a manufacturing method of a vacuum multi-layer glass including the same which make it possible to enhance productivity and decrease defect ratios in such a way to make simpler a manufacture process because an upper layer glass plate is bonded on an integrated lower plate glass into which a metallic container filled with a getter is inserted, and the thusly formed inner space is made to be a vacuum state.

To achieve the above objects, there is provided an integrated lower plate glass, comprising a lower layer glass plate; a rim part which is formed with a certain height along an edge portion of the lower layer glass plate and is configured to form a space part in its interior; an upper layer glass plate holding part which is formed and integrated with the rim part and is formed along an inner circumferential surface of the rim part with and has a height lower than that of the rim part and holds an upper layer glass plate on its upper surface; a getter which is configured to absorb moisture and gas generating from the space part after the space part is vacuumed; at least one getter insertion part which is formed at one side of the upper layer glass plate holding part, the getter being inserted into the one getter insertion part; and an exhaust pipe one end of which is connected to the getter insertion part, and the other end of which is connected to a vacuum pump for thereby making the space part become a vacuum state.

In the getter insertion part is mounted a hollow metallic container, and the getter is filled in the interior of the metallic container.

There are further provided a plurality of spacers which are integrally formed with the upper layer or lower glass plate on a surface where the upper layer or lower layer glass plates face each other and are configured to prevent the upper layer glass plate and the lower layer glass plate from being bent when the space part is vacuumed.

The lower layer glass late is formed in a quadrangle shape, and a side surface among four rim parts to which side surface the exhaust pipe is connected has an insertion groove which is inwardly concaved at a regular interval in a right angle direction from the exhaust pipe, and the insertion groove is filled with a sealing agent after the space part becomes a vacuum state, and the exhaust pipe is cut.

The getter insertion part has an opening part for the sake of the contact between the space part and the getter.

To achieve the above objects, there is provided a method for manufacturing a vacuum multi-layer glass including an integrated lower layer plate glass, comprising a step (a) in which as a rim part is formed at an edge portion of a lower layer glass plate, a space part is formed in the interior, and a getter insertion part is formed in at least one inner side of the upper glass plate holding part formed along an inner circumferential surface of the rim part, and an integrated lower layer plate glass is prepared in which an exhaust pipe is connected to an end portion of the getter insertion part; a step (b) in which a metallic container filled with a getter is mounted on the getter insertion part; a step (c) in which an upper layer glass plate is held on an upper surface of the upper layer glass plate holding part, and the upper layer glass plate is bonded on an upper surface of the upper layer glass plate holding part and on an inner surface of the rim part; a step (d) in which the space part is made to become a vacuum state by connecting the other end of the exhaust pipe to the vacuum pump; and a step (e) in which the exhaust pipe is cut.

In the step (c), an adhesive is filled between the upper layer glass plate holding part and the upper layer glass plate and is sealed, and the adhesive is heat-treated for 10 min to 1 hour at 400 to 850°C for thereby hardening the adhesive and bonding it.

The adhesive is a Frit glass.

There is further provided a step after the step (e), in which step a sealing agent is filled in the insertion groove for the cut exhaust pipe not to be exposed to the outside for thereby hiding the exhaust pipe.

### Advantageous effects

According to the an integrated lower-plate glass and a manufacturing method of a vacuum multi-layer glass including the same of the present invention make it possible to effectively activating the getter with a simple process while ensuring the enhancement of productivity and decreasing defect ratios by comprising a lower layer glass plate; a rim part which is integrally formed with the lower layer glass plate and is formed with a certain height along an edge portion of the lower layer glass plate and is configured to form a space part in its interior; an upper layer glass plate holding part which is formed and integrated with the rim part and is formed along an inner circumferential surface of the rim part with and has a height lower than that of the rim part and holds an upper layer glass plate on its upper surface; a getter which is configured to absorb moisture and gas generating from the space part after the space part is vacuumed; at least one getter insertion part which is formed at one side of the upper layer glass plate holding part, the getter being inserted into the getter insertion part; and an exhaust pipe one end of which is connected to the getter insertion part, and the other end of which is connected to a vacuum pump for thereby making the space part become a vacuum state.

### Brief Description of Drawings

Figure 1 is a perspective view illustrating a vacuum multi-layer glass with an integrated lower plate glass according to an embodiment of the present invention.

Figure 2 is a cross sectional view taken along line A-A of Figure 1.

Figure 3 is a cross sectional view taken along line B-B of Figure 1.

Figure 4 is a view illustrating a moisture and gas absorbent according to an embodiment of the present invention.

Figure 5 is a flow chart illustrating a method for manufacturing a vacuum multi-layer glass with an integrated lower plate glass according to the present invention.

Figures 6 to 8 are perspective and cross sectional views illustrating a method for manufacturing a vacuum multi-layer glass with an integrated lower plate glass manufactured over the steps of Figure 5.

### * Descriptions of the reference numerals shown in the drawings*

| | |
|---|---|
| 100: vacuum multi-layer glass plate glass | 110: integrated lower |
| 111: lower layer glass plate | 112: space part |
| 113: rim part plate holding part | 115: upper layer glass |
| 117: getter insertion part | 119: exhaust pipe |
| 120: metallic container | 121: getter |
| 130: upper layer glass plate | 140: spacer |
| 150: sealing agent | 160: torch |

### Best modes for carrying out the invention

The integrated lower plate glass according to the present invention comprises a lower layer glass plate; a rim part which is integrally formed with the lower layer glass plate and is formed with a certain height along an edge portion of the lower layer glass plate and is configured to form a space part in its interior; an upper layer glass plate holding part which is formed and integrated with the rim part and is formed along an inner circumferential surface of the rim part with and has a height lower than that of the rim part and holds an upper layer glass plate on its upper surface; a getter which is configured to absorb moisture and gas generating from the space part after the space part is vacuumed; at least one getter insertion part which is formed at one side of the upper layer glass plate holding part, the getter being inserted into the one getter insertion part; and an exhaust pipe one end of which is connected to the getter insertion part, and the other end of which is connected to a vacuum pump for thereby making the space part become a vacuum state.

The method for manufacturing a vacuum multi-layer glass according to the present invention comprises a step (a) in which as a rim part is formed at an edge portion of a lower layer glass plate, a space part is formed in the interior, and a getter insertion part is formed in at least one inner side of the upper glass plate holding part formed along an inner circumferential surface of the rim part, and an integrated lower plate glass is prepared in which an exhaust pipe is connected to an end portion of the getter insertion part; a step (b) in which a metallic container filled with a getter is mounted on the getter insertion part; a step (c) in which an upper layer glass plate is held on an upper surface of the upper layer glass plate holding part, and the upper layer glass plate is bonded on an upper surface of the upper layer glass plate holding part and on an inner surface of the rim part; a step (d) in which the space part is made to become a vacuum state by connecting the other end of the exhaust pipe to the vacuum pump; and a step (e) in which the exhaust pipe is cut.

### Modes for carrying out the invention

The terms and words used in the specification and claims are not supposed to be interpreted in a conventional manner or based on the dictionary, and but supposed to be interpreted based on the principles that the inventor himself can properly define the concepts of the terms for the purpose of describing in the best manner while matching the technical concepts of the present invention.

The embodiments of the present invention will be described with reference to the accompanying drawings.

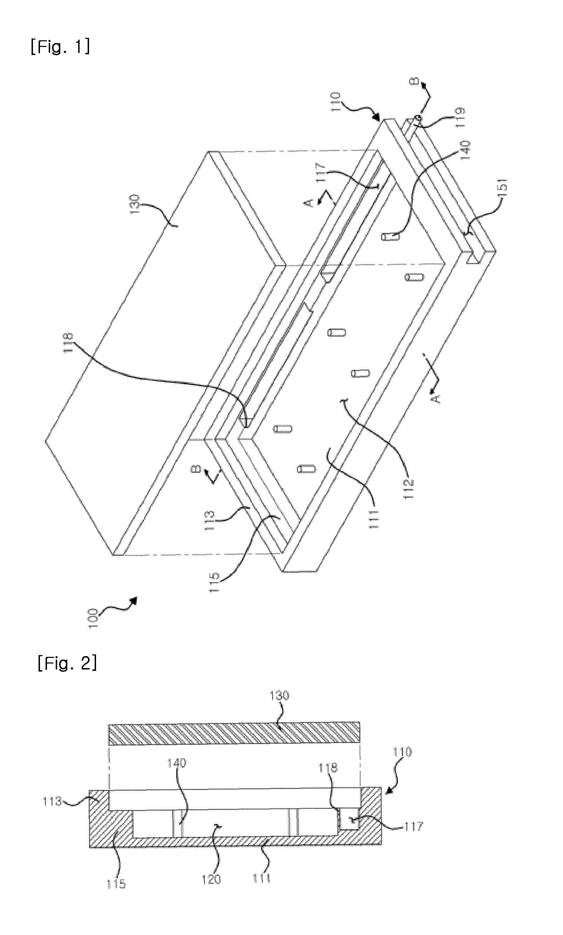

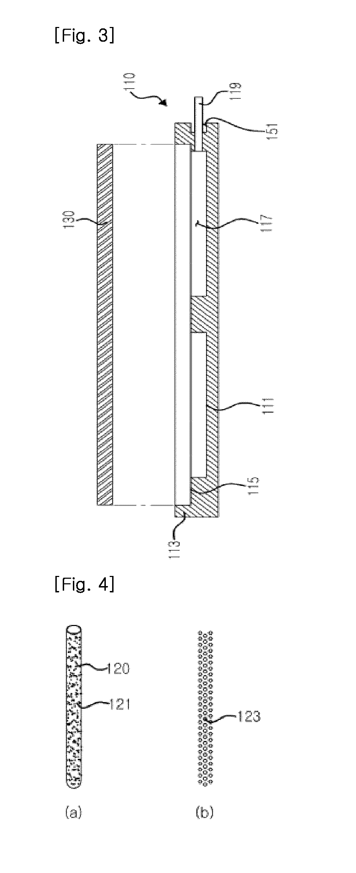

Figure 1 is a perspective view illustrating a vacuum multi-layer glass with an integrated lower plate glass according to an embodiment of the present invention. Figure 2 is a cross sectional view taken along line A-A of Figure 1. Figure 3 is a cross sectional view taken along line B-B of Figure 1.

Referring to Figures 1 to 3, the vacuum multi-layer glass 100 is constructed in such a way that the upper layer and lower layer glass plates 130 and 111 are spaced apart at regular intervals and are bonded with each other while having vacuum states in them.

The upper layer and lower layer glass plates 130 and 111 are glass plates with certain thickness and surface area, of which the lower layer glass plate 111 belongs to the integrated lower plate glass 110.

The integrated lower plate glass 110 comprises a lower layer glass plate 111, a rim part 113, an upper layer glass plate holding part 115, a getter 121, a getter insertion part 117 and an exhaust pipe 119.

The lower layer glass plate 111 is configured to face the upper layer glass plate 130 after the vacuum multi-layer glass 100 is manufactured.

The upper layer glass plate 130 and the lower layer glass plate 111 according to an embodiment of the present invention are described as having quadrangle shapes; however their shapes are not limited thereto.

The rim part 113 is formed in a shape of a wall with a certain height along an edge portion of the lower layer glass plate 111 and has a space part 112 in its interior and is integrally formed with the same material as the lower layer glass plate 111, and the space part 112 is vacuumed by means of a vacuum pump connected to the exhaust pipe 119.

The upper layer glass plate holding part 115 is integrally formed with the same materials as the rim part 113 and the lower layer glass plate 111 and is formed in a shape of a wall along an inner circumferential surface of the rim part 113.

The upper layer glass plate holding part 115 is configured to hold the upper layer glass plate 130 on its upper surface, and the upper layer glass plate holding part 115 has a height lower than the rim part 113, and the difference of the height as compared to the rim part 113 is preferably formed same as the thickness of the upper layer glass plate 130.

So, as the upper layer glass plate 130 is held on the upper layer glass plate holding part 115 and is bonded, the upper surface of the upper layer glass plate 130 and the upper surface of the rim part 113 are matched and do not form any steps. At this time, the upper layer glass plate 130 comes to bond with the upper surface layer glass plate holding part 115 as well as the inner surface of the rim par 113, so the bonding surface area increases, which results in more effective bonding.

When bonding the upper layer glass plate 130, an adhesive called Frit glass is used, the bonding method of which will be described later.

The getter (121 of Figure 4) is configured to absorb moisture and gas coming from the space part 112, and in details the getter 121 is bonded after the upper layer glass plate 130 is held on the upper layer glass plate holding part 115, so it can absorb moisture and gas generating after the space part 112 is vacuumed by means of the vacuum pump (not shown).

Figure 4 is a view illustrating a moisture and gas absorbent according to an embodiment of the present invention, and Figure 4(a) is a view of a getter 121 in a form of powder filled in the metallic container 120 and Figure 4(b) is a view of a moisture absorbent 123 in a form of grain.

As shown in Figure 4(a) , the getter 121 filled in the metallic container 120 is manufactured to well absorb gas and moisture, so it can be exclusively used for the sake of the vacuum multi-layer glass 100. The getter 121 might be formed of one of the following items below depending on its consisting components.

① Zr (Zirconium) :Fe (Iron) can be formed in a form of an alloy powder at a weight ratio (wt%) of (45∼80) : (55∼20).

② Ti (Titanium) :Fe (Iron) are formed in a form of an alloy powder at a weight ratio (wt%) of (45∼80) : (55∼20).

③ Either a powder of Zr (Zirconium) or a powder of Ti(Titanium) is formed in a certain form.

④ The items ①, ②, ③ are mixed at the weight ratio (wt%) of ①:②:③=(20∼40) : (20∼40) : (60∼20).

⑤ One of the items of ①∼④ and part or whole of Molecular sieve, Al₂O₃, MgO, CaO, BaO, which are absorbent, are mixed at a weight ratio (wt%) of (5∼20) : (95∼80) and can be used.

In other words, the moisture and gas generating after the upper layer glass plate 130 is held on the upper layer glass plate holding part 115 and is bonded, and the space part 112 is vacuumed using the vacuum pump is removed by means of the getter 121, so the vacuum multi-layer glass 100 can maintain a high vacuum state for a couple of years or tens of years. In other words, the lifespan of the vacuum multi-layer glass100 is almost same as that of the getter 121.

The moisture absorbent 123 of Figure 4(b) is an absorbent in a form of grains which can be used together with the getter 121, and the getter 121 alone might be used or it can be used together with the getter 121.

The getter 121 is configured to remove the moisture and gas in an activated state, and the getter 121 is activated by heating, the operation of which will be described later.

The getter insertion part 117 is at least one groove formed in the interior of the upper layer glass plate holding part 115 for the purpose of mounting the metallic container 120 filled with the getter 121. For example, as shown in Figure 1, it might be formed on one of four upper layer glass plate holding parts 115 or it might be formed on two upper layer glass plate holding parts 115 or it might be formed on all of the four upper layer glass plate holding part 115.

As shown in Figure 1, the getter insertion part 117 might be formed in a form of two grooves on one upper layer glass plate holding parts 115, but the number of it is not limited, and it might be formed in three or four.

At this time, an opening part 118 might be formed in the getter insertion part 117, in which the opening part 118 the getter 121 can come into contact with the space part 112 for thereby effectively absorbing moisture or gas coming from the space part 112.

One end of the exhaust pipe 119 is connected to the getter insertion part 117, and the other end of it is connected to the vacuum pump for thereby making a vacuum state in such a way to discharge externally the moisture and gas from the space part 112 after the vacuum multi-layer layer 100 is manufactured.

In other words, the vacuum multi-layer glass 100 is manufactured to have a vacuum state via the exhaust pipe 119 connected to the vacuum pump, and the getter 121 absorbs the moisture and gas which are generated afterward, so the space part 112 can continuously maintain in a vacuum state.

The integrated lower plate glass 110 is manufactured in such a way to inject the liquid made by melting glass into a casting having the same shape as it, and the lower layer glass plate 111, the rim part 113, the upper layer glass plate holding part 115, the getter insertion part 117 and the exhaust pipe 119 are integrated.

It is manufactured as the metallic container 120 filled with a getter 121 is mounted on the getter insertion part 117. So, at the lower layer glass plate 111 are formed the rim part 113 and the upper layer glass plate holding part 115 by way of a separate process. In the interior of the upper layer glass plate holding part 115 is formed a getter insertion part 117, so it is possible to enhance productivity and decrease defect ratios because a complicated process of connecting the exhaust pipe 119 to the getter insertion part 117 is not needed.

At the portion where the upper layer or lower layer glass plates 130 and 111 face each other are formed a plurality of spacers 140. For example, as shown in Figure 1, when the spacer 140 is formed on the lower layer glass plate 111, the height of it preferably corresponds to the height that it can reach the upper layer glass plate 130 when the upper layer glass plate holding part 115 is held.

The spacer 140 is configured to prevent the upper layer and lower layer glass plates 130 and 111 from being bent owing to the pressure which occurs as a vacuum state is made when eliminating the moisture and gas from the interior after the upper layer glass plate 130 is adhered to the upper layer glass plate holding part 115.

The spacer 140 might be integrally formed when the integrated lower plate glass 110 is manufactured when the lower layer glass plate 111 is formed.

Finally, as shown in Figure 1, at the rim part 113 connected to the exhaust pipe 119 in the rim part 113 might be formed an insertion groove 151 which is concaved at a certain interval from an edge portion of the lower layer glass plate 111 in a right angle direction from the exhaust pipe 119.

Here the insertion groove 151 means a space which prevents the end portion of the exhaust pipe 119 cut and filled with the sealing agent 150 such as a silicon, etc. from exposing to the outside after the inner side of the vacuum multi-layer glass 100 becomes a vacuum state by way of the exhaust pipe 119, and the end portion of the exhaust pipe 119 is cut.

As the exhaust pipe 119 is cut and the exhaust pipe 119 is sealed by means of the sealing agent 150, it is possible to manufacture a much safer, good-looking vacuum multi-layer glass 100.

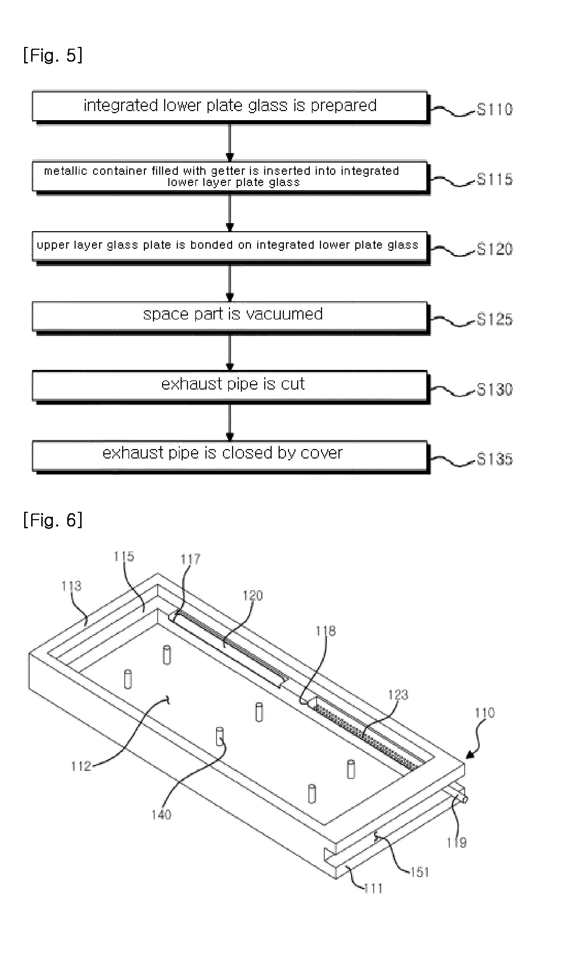

Figure 5 is a flow chart illustrating a method for manufacturing a vacuum multi-layer glass with an integrated lower plate glass according to the present invention. Figures 6 to 8 are perspective and cross sectional views illustrating a method for manufacturing a vacuum multi-layer glass with an integrated lower plate glass manufactured over the steps of Figure 5.

In the step S110 of Figure 5, the integrated lower palate glass 110 is prepared, and as shown in Figure 1, the integrated lower plate glass 110 has a space part 112 in the interior as the rim part 113 is formed at the edge portion of the lower layer glass plate 111, and the upper layer glass plate holding part 115 is formed along the inner circumferential surface of the rim part 113. In at least one inner portion of the upper layer glass plate holding part 115 is formed a getter insertion part 117 which mounts the metallic container 120 filled with a getter 121. In addition, to an end portion of the getter insertion part 117 is connected the exhaust pipe 119.

In the step S115, as shown in Figure 6, a metallic container 120 filled with the getter 121 configured to absorb moisture and gas which are continuously generate even after the inner side of the vacuum multi-layer glass 100 is vacuumed is mounted in the getter insertion part 117.

In details, as the getter 121 is activated by way of heating, the getter 121 comes to absorb moisture and gas. When heating the getter 121, all the portions of the vacuum multi-layer glass 100 is heated, so something problematic with the performance occurs.

Generally, a high frequency is used so as to enable the getter 121 to activate when heating. The high frequency is characterized in heating only the metallic materials.

The getter 121 according to an embodiment of the present invention is filled in the metallic container 120. Even when the vacuum multi-layer glass 100 is heated with a high frequency in order to activate the getter 121, the upper layer and lower layer glass plates 130 and 111 are not heated, and only the metallic container 120 is heated, which means that the getter 121 filled in it is heated, so the getter 121 can be activated in safe and easy ways.

In the next step S120, the upper layer glass plate 130 is held on the upper layer glass plate holding part 115 of the integrated lower plate glass 110 and is adhered using a Frit glass which is an adhesive.

When bonding them, a Frit glass is filled between the upper layer glass plate holding part 115 and the upper layer glass plate 130 and is sealed and hardened in such a way to heat-treat the Frit glass for 10 min to 1 hour at 400 to 850°C. As the Frit glass is hardened, the upper layer glass plate 130 is bonded to the upper layer glass plate holding part115.

In the next step S125, the moisture and gas are discharged to the outside by pumping moisture and gas from the space part 112 by means of the vacuum pump connected to the exhaust pipe 119, thus vacuuming the space part 112.

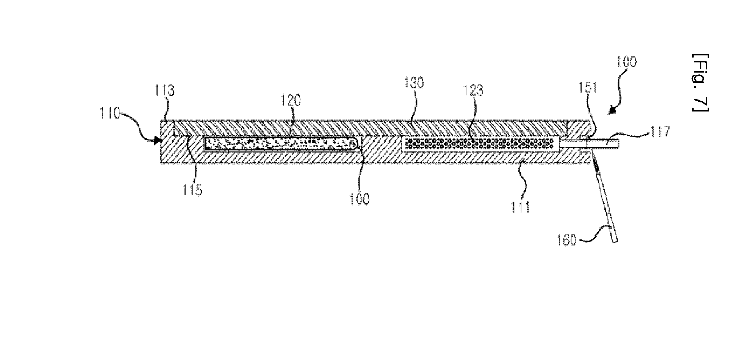

In the next step S130, as shown in Figure 7, when the interior reaches a certain vacuum level, the exhaust pipe 119 is cut using a torch 160.

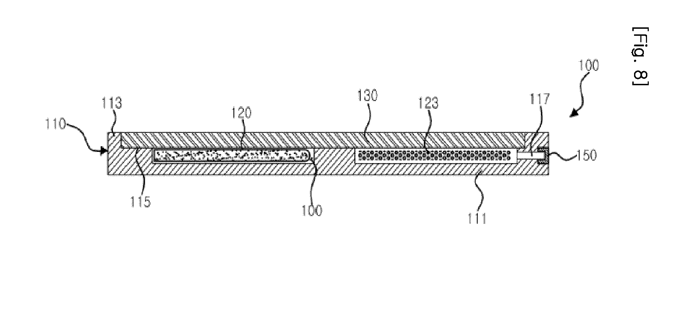

In the next step S135, as shown in Figure 8, the cut exhaust pipe 119 is protected and prevented from being exposed to the outside, and the insertion groove 151 is filled with the sealing agent 150, and the cut exhaust pipe 119 is hidden for a good-looking construction.

Here it is preferred that the rim part 113 of a side surface where the exhaust pipe 119 is formed rather than the upper layer and lower layer glass plates 130 and 111 are inwardly spaced apart from the edge portion of the lower layer glass plate 111 as compared to the protruded exhaust pipe 119.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

### Industrial applicability

The present invention is directed to enhancing productivity and decreasing defect ratios in such a way that a manufacture process of a vacuum multi-layer glass is simplified because an upper layer glass plate is bonded to an integrated lower plate glass into which a metallic container filled with a getter is inserted, and the thusly formed inner space is vacuumed.

## Claims

1. An integrated lower plate glass, comprising:
a lower layer glass plate;
a rim part which is formed with a certain height along an edge portion of the lower layer glass plate and is configured to form a space part in its interior;
an upper layer glass plate holding part which is formed and integrated with the rim part and is formed along an inner circumferential surface of the rim part with and has a height lower than that of the rim part and holds an upper layer glass plate on its upper surface;
a getter which is configured to absorb moisture and gas generating from the space part after the space part is vacuumed;
at least one getter insertion part which is formed at one side of the upper layer glass plate holding part, the getter being inserted into the getter insertion part; and
an exhaust pipe one end of which is connected to the getter insertion part, and the other end of which is connected to a vacuum pump for thereby making the space part become a vacuum state.

2. An integrated lower plate glass according to claim 1, wherein in the getter insertion part is mounted a hollow metallic container, and the getter is filled in the interior of the metallic container.

3. An integrated lower plate glass according to either claim 1 or claim 2, further comprising:
a plurality of spacers which are integrally formed with the upper layer or lower glass plate on a surface where the upper layer or lower layer glass plates face each other and are configured to prevent the upper layer glass plate and the lower layer glass plate from being bent when the space part is vacuumed.

4. An integrated lower plate glass according to claim 1, wherein said lower layer glass late is formed in a quadrangle shape, and a side surface among four rim parts to which side surface the exhaust pipe is connected has an insertion groove which is inwardly concaved at a regular interval in a right angle direction from the exhaust pipe, and the insertion groove is filled with a sealing agent after the space part becomes a vacuum state, and the exhaust pipe is cut.

5. An integrated lower plate glass according to claim 1, wherein said getter insertion part has an opening part for the sake of the contact between the space part and the getter.

6. A method for manufacturing a vacuum multi-layer glass including an integrated lower layer plate glass, comprising:
a step (a) in which as a rim part is formed at an edge portion of a lower layer glass plate, a space part is formed in the interior, and a getter insertion part is formed in at least one inner side of the upper glass plate holding part formed along an inner circumferential surface of the rim part, and an integrated lower plate glass is prepared in which an exhaust pipe is connected to an end portion of the getter insertion part;
a step (b) in which a metallic container filled with a getter is mounted on the getter insertion part;
a step (c) in which an upper layer glass plate is held on an upper surface of the upper layer glass plate holding part, and the upper layer glass plate is bonded on an upper surface of the upper layer glass plate holding part and on an inner surface of the rim part;
a step (d) in which the space part is made to become a vacuum state by connecting the other end of the exhaust pipe to the vacuum pump; and
a step (e) in which the exhaust pipe is cut.

7. A method for manufacturing a vacuum multi-layer glass including an integrated lower layer plate glass according to claim 6, wherein in the step (c), an adhesive is filled between the upper layer glass plate holding part and the upper layer glass plate and is sealed, and the adhesive is heat-treated for 10 min to 1 hour at 400 to 850°C for thereby hardening the adhesive and bonding it.

8. A method for manufacturing a vacuum multi-layer glass including an integrated lower layer plate glass according to claim 7, wherein said adhesive is a Frit glass.

9. A method for manufacturing a vacuum multi-layer glass including an integrated lower layer plate glass according to claim 6, further comprising a step after the step (e), in which step a sealing agent is filled in the insertion groove for the cut exhaust pipe not to be exposed to the outside for thereby hiding the exhaust pipe.
